# EUROPÄISCHE PATENTSCHRIFT

(11) **EP 2 821 598 B1**
(45) Veröffentlichungstag und Bekanntmachung des Hinweises auf die Patenterteilung: **06.04.2016**
(21) Anmeldenummer: 14173663.7
(22) Anmeldetag: 24.06.2014
(51) Int. Cl.: F01D 25/18, F02C 7/06, F02C 7/32, B01D 45/16

(54) **Strahltriebwerk mit wenigstens einem Ölabscheider, durch den ein Luft-Öl-Volumenstrom führbar ist**
Jet engine with at least one oil separator, through which an air-oil volume flow can be conveyed
Moteur à réaction doté d'au moins un séparateur d'huile permettant le passage d'un débit volumique huile/air

(30) Priorität: 01.07.2013 DE 102013106877
(43) Veröffentlichungstag der Anmeldung: 07.01.2015
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Kronthaler, Wolfgang N.K.

(56) Entgegenhaltungen:
- EP-A2- 2 592 252
- DE-A1-102006 058 343
- DE-T2- 60 308 574
- US-A1- 2005 211 093
- US-A1- 2012 060 508
- US-A1- 2012 144 841

## Beschreibung

Die Erfindung betrifft ein Strahltriebwerk mit wenigstens einem Ölabscheider, durch den ein Luft-Öl-Volumenstrom führbar ist, gemäß der im Oberbegriff des Patentanspruches 1 näher definierten Art.

Bei aus der Praxis bekannten Strahltriebwerken wird im Betrieb ölhaltige Verbrauchsluft aus Lagerkammern und aus einem Öltank über separate Leitungen einem Ölabscheider bzw. einem sogenannten Breather zugeführt, der als Zentrifugalölabscheider ausgeführt sein kann. Die Separierung großer Ölpartikel aus der Verbrauchsluft bzw. den Luft-Öl-Volumenströmen aus den Lagerkammern und dem Öltank erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus der Luft gefiltert. Das durch diese Abscheidung abgeschiedene Öl wird dem Ölkreislauf wieder zugeführt. Die gereinigte Luft wird über Bord an die Umwelt abgegeben.

Die dem Breather bzw. dem Zentrifugalölabscheider zugeführten Luft-Öl-Volumenströme sind stark ölhaltig und hoch temperiert. Dadurch sind in den Luft-Öl-Volumenströmen auch sehr feine Ölpartikel. Diese werden aufgrund ihrer geringen Größe nur ungenügend mittels der Zentrifuge separiert und nur unzureichend durch den in der Zentrifuge befindlichen Metallschaum aufgefangen. Dadurch gelangen sie über einen Auslass des Ölabscheiders für den Luftstrom in die Umwelt. Diese Verluste begründen den durchschnittlichen Ölverbrauch heutiger Triebwerke. Weiterhin treten die im Bereich des Ölabscheiders nicht abscheidbaren Öltröpfchen in Form eines feinen Nebels aus dem Triebwerk aus, was einen hohen Ölverbrauch von Strahltriebwerken verursacht und aus Umweltgesichtspunkten ebenfalls unerwünscht ist.

Ein Gasturbinenölabscheider mit einem Gehäuse ist aus der DE 10 2006 058 343 A1 bekannt, wobei das Gehäuse mit einem Einlass versehen ist. In dem Gehäuse ist ein in Rotation versetzbares Filterelement angeordnet, das mit einem Luftablass stromab des Filterelements versehen ist. Zusätzlich umfasst das Gehäuse zumindest einen Ölablass. Stromauf des Filterelements sind Mittel zur Aufbringung von elektrostatischen Kräften angeordnet, um die Neigung von Öltropfen, sich mit einem Ölfilm im Filterelement zu verbinden, zu erhöhen und eine Abscheideleistung im Bereich des Gasturbinenölabscheiders zu verbessern.

Eine Temperatur eines in solche Gasturbinenölabscheider, die auch als Breather bezeichnet werden, eingeleiteten Luft-Öl-Volumenstromes ist unter Umständen nachteilhafterweise sehr hoch, weshalb das aus dem Stand der Technik bekannte elektrostatische Aufladen eines Luft-Öl-Gemisches nur bedingt zur Verbesserung einer Abscheideleistung im Bereich eines Gasturbinenölabscheiders geeignet ist, da das im Luft-Öl-Volumenstrom gasförmig vorliegende Öl durch die bekannte Vorgehensweise nicht in gewünschtem Umfang aus dem Luft-Öl-Volumenstrom abscheidbar ist.

Darüber hinaus ist aus der US 4,525,995 eine Gasturbinenmaschine bekannt, bei der mehrere Lagereinrichtungen der Maschine in Lagerkammern angeordnet sind. Öl wird aus den Lagerkammern von die Lagerkammern durchströmender Luft abgesaugt, womit Luft-Öl-Volumenströme aus den Lagerkammern in Richtung eines Ölabscheiders geführt werden, der im Bereich einer Nebenaggregategetriebeeinrichtung vorgesehen ist. Im Bereich des Ölabscheiders wird das Öl aus den Luft-Öl-Volumenströmen abgetrennt und die Luft in Richtung eines Niederdruckbereiches der Maschine abgeführt, während das abgetrennte Öl in Richtung eines Einlasses einer Absaugpumpe geleitet wird. Die jeweils von den Lagerkammern in Richtung des Ölabscheiders geführten Luft-Öl-Volumenströme werden in vom Innenraum der Nebenaggregategetriebeeinrichtung abgetrennten Bereiche am Innenraum vorbei direkt in den Ölabscheiders mit unter Umständen ebenfalls hoher Temperatur eingeleitet, weshalb das in dem dem Ölabscheider zugeführten Luft-Öl-Volumenstrom gasförmig vorliegende Öl ebenfalls nicht in gewünschtem Umfang aus dem Luft-Öl-Volumenstrom im Bereich des Ölabscheiders abscheidbar ist.

Aus der EP 2 592 252 A2 ist ein Getriebe bekannt, in dessen Innenraum ein Luft-Öl-Gemisch von einer externen Quelle über einen Einlass einleitbar ist. Das Luft-Öl-Gemisch wird über eine Einlasspassage in eine Hohlwelle eingeführt. Das Luft-Öl-Gemisch strömt über einen Einlass in Richtung einer Schaufelanordnung und wird dort bedruckt und strömt im Bereich eines Einlasses in eine Trenneinheit eines Ölabscheiders. Im Inneren der Trenneinheit ist ein als Metall- oder anderer Schaum ausgeführtes Trennmedium vorgesehen, das von dem Luft-Öl-Gemisch durchströmt wird. Die gereinigte Luft strömt aus der Trenneinheit in die innerhalb der Welle des Ölabscheiders angeordnete Auslasspassage und aus dem Getriebe. Das im Bereich der Trenneinheit aus dem Luft-Öl-Gemisch abgeschiedene Öl strömt über die Abflussöffnung aus der Trenneinheit.

Der vorliegenden Erfindung liegt daher die Aufgabe zugrunde, ein Strahltriebwerk mit wenigstens einem Ölabscheider zur Verfügung zu stellen, bei welchem auf konstruktiv einfache und kostengünstige Art und Weise ein Ölgehalt eines aus dem Strahltriebwerk an die Umgebung abgegebenen Luftvolumenstromes möglichst gering ist und bei dem eine Kühlung und Schmierung von im Innenraum des Gehäuses der Nebenaggregategetriebeeinrichtung angeordneten Zahnradpaarungen gewährleistet ist.

Erfindungsgemäß wird diese Aufgabe mit einem Strahltriebwerk mit den Merkmalen des Patentanspruches 1 gelöst.

Das erfindungsgemäße Strahltriebwerk ist mit wenigstens einem Ölabscheider ausgeführt, durch den ein Luft-Öl-Volumenstrom aus wenigstens einem mit Öl beaufschlagten Bereich zum Abscheiden von Öl führbar ist.

Erfindungsgemäß wird insbesondere die Abscheideleistung im Bereich des Ölabscheiders im Vergleich zu aus dem Stand der Technik bekannten Lösungen auf konstruktiv einfache Art und Weise dadurch erhöht, dass der Luft-Öl-Volumenstrom aus dem mit Öl beaufschlagten Bereich über einen Innenraum, in dem vorzugsweise über einen Schmier- und Kühlkreislauf rotierenden Bauteile, wie Zahnräder, Lagereinrichtung und dergleichen mit Schmier- und Kühlöl beaufschlagbar sind, eines Gehäuses einer Nebenaggregategetriebeeinrichtung in den Ölabscheider einleitbar ist und die Luft über einen Luftauslass und das Öl über einen Ölauslass aus dem Ölabscheider abführbar sind.

Durch das Einleiten des Luft-Öl-Volumenstromes aus dem mit Öl beaufschlagten Bereich in den Innenraum des Gehäuses der Nebenaggregategetriebeeinrichtung ist eine Temperatur des Luft-Öl-Volumenstromes bei entsprechender Temperaturdifferenz zwischen dem Innenraum des Gehäuses der Nebenaggregategetriebeeinrichtung und dem Luft-Öl-Volumenstrom auf einfache Art und Weise reduzierbar. Bei entsprechender Abkühlung des Luft-Öl-Volumenstromes kondensiert im Luft-Öl-Volumenstrom gasförmig vorliegendes Öl, was eine Vergrößerung von Tropfendurchmessern der im Bereich des Luft-Öl-Volumenstromes vorliegenden Ölpartikel begünstigt. Zusätzlich vereinigen sich die im Luft-Öl-Volumenstrom vorhandenen Öltröpfchen beim Aufeinandertreffen auf bereits im Innenraum des Gehäuses der Nebenaggregategetriebeeinrichtung vorhandene Öltröpfchen aufgrund vorliegender Anziehungskräfte zu gewünscht größeren Tropfen, die im weiteren Strömungsweg des Luft-Öl-Volumenstromes mit geringerem Aufwand als Ölpartikel mit kleinerem Durchmesser aus der Luft mechanisch abscheidbar sind. Anschließend besteht die Möglichkeit, die gereinigte Luft stromab des Ölabscheiders an die Umgebung des Strahltriebwerks oder einen Triebwerkskern- oder Bypassstrom auszuleiten, während das abgeschiedene Öl über den Ölauslass in einen Ölkreislauf des Strahltriebwerks zurückgeleitet wird.

Um eine Kühlung und Schmierung von im Innenraum des Gehäuses der Nebenaggregategetriebeeinrichtung angeordneten Zahnradpaarungen durch das Einleiten des Luft-Öl-Volumenstromes nicht nachteilig zu beeinflussen, sind im Bereich der Zahnradpaarungen des erfindungsgemäßen Strahltriebwerks Ablenkbleche vorgesehen, mittels welchen die mit Öl zum Kühlen und Schmieren zu beaufschlagenden Bereiche von Zahnradpaarungen der Nebenaggregategetriebeeinrichtung von einer Strömung des Luft-Öl-Volumenstromes abschirmbar sind

Bei einer mit hoher Abscheideleistung im Bereich des Ölabscheiders betreibbaren Ausführungsform des Strahltriebwerks ist der Ölabscheider mit einem in Rotation versetzbaren porösen Bereich ausgeführt, der im Strömungsweg des Luft-Öl-Volumenstromes angeordnet ist und vom Luft-Öl-Volumenstrom durchströmbar ist.

Die durch das Einleiten des Luft-Öl-Volumenstromes aus dem wenigsten einen mit Öl beaufschlagten Bereich in den Innenraum des Gehäuses der Nebenaggregategetriebeeinrichtung bewirkte vorbeschriebene Vergrößerung der Tropfendurchmesser führt auch zu einer Verbesserung der Abscheideleistung im porösen Bereich des Ölabscheiders, in dem das im Luft-Öl-Volumenstrom vorhandene Öl einerseits wie im Bereich eines Prallfilters und andererseits wie im Bereich einer Zentrifuge aus dem Luft-Öl-Volumenstrom abgeschieden wird. Die im Bereich des Innenraums des Gehäuses der Nebenaggregategetriebeeinrichtung vergrößerten Ölpartikel des Luft-Öl-Volumenstromes können im porösen Bereich, der vorzugsweise als Metallschaum oder dergleichen ausgeführt sein kann, mit geringem Aufwand effizienter separiert werden. Dadurch werden über die Abluft eines Strahltriebwerkes auftretende Ölverluste durch die verringerten Emissionen vermindert.

Bei einer konstruktiv einfachen Ausführungsform des erfindungsgemäßen Strahltriebwerkes ist stromauf des porösen Bereiches des Ölabscheiders zumindest ein Umlenkbereich im Strömungsweg des Luft-Öl-Volumenstromes vorgesehen, in dessen Bereich zumindest ein Teil des Öls aus dem Luft-Öl-Volumenstrom aufgrund der wirkenden Zentrifugalkraft abscheidbar ist. Damit sind größere Ölpartikel bzw. Öltröpfchen aus dem Luft-Öl-Volumenstrom auch bereits vor Eintritt in den porösen Bereich des Ölabscheiders auf konstruktiv einfache Art und Weise abscheidbar und ein Strömungswiderstand im porösen Bereich des Ölabscheiders aufgrund einer zu hohen Beladung mit Öl auf ein definiertes Niveau begrenzbar.

Die Abscheideleistung ist bei einer Weiterbildung des erfindungsgemäßen Strahltriebwerkes dadurch verbesserbar, dass wiederum stromauf des porösen Bereiches des Ölabscheiders zumindest eine Zentrifuge im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist. Dabei ist der Abscheidegrad in Abhängigkeit der jeweils eingebrachten Energie im Bereich der Zentrifuge in gewünschtem Umfang einstellbar, beispielsweise in Abhängigkeit eines Grades der Beladung des Luft-Öl-Volumenstromes mit Öl.

Bei einer einfach montierbaren Ausführungsform des Strahltriebwerkes ist der Umlenkbereich und/oder die Zentrifuge im Bereich des Ölabscheiders vorgesehen und vorzugsweise in ein Gehäuse des Ölabscheiders integriert, womit der Ölabscheider ein Modul darstellt, das mit geringem Aufwand im vorgesehenen Bauraum des Strahltriebwerkes montierbar ist.

Der Ölverlust eines Strahltriebwerkes ist auf kosten- und bauraumgünstige Art und Weise dadurch weiter verringerbar, wenn mehrere mit Öl beaufschlagte Bereiche eines Strahltriebwerkes über den Innenraum des Gehäuses der Nebenaggregategetriebeeinrichtung mit dem Ölabscheider in Wirkverbindung stehen.

Bei weiteren vorteilhaften Ausführungsformen des erfindungsgemäßen Strahltriebwerkes ist oder sind der Ölabscheider und/oder der Umlenkbereich und/oder die Zentrifuge wenigstens teilweise innerhalb und/oder außerhalb eines Gehäuses der Nebenaggregategetriebeeinrichtung angeordnet, wobei eine Anordnung der verschiedenen Baugruppen innerhalb des Gehäuses der Nebenaggregategetriebeeinrichtung einen zusätzlichen Schutz des Ölabscheiders, des Umlenkbereiches und/oder der Zentrifuge gegenüber Umwelteinflüssen darstellt, während eine Anordnung der besagten Baugruppen außerhalb des Gehäuses der Nebenaggregategetriebeeinrichtung konstruktive Änderungen im Bereich des Gehäuses der Nebenaggregategetriebeeinrichtung unter Umständen nicht erforderlich macht.

Ein mit Öl beaufschlagter Bereich ist bei weiteren vorteilhaften Ausführungsformen des erfindungsgemäßen Strahltriebwerkes eine Lagerkammer und/oder ein Öltank, womit aus diesen Bereichen durch einen Luftstrom ausgetragenes Öl in vorbeschriebenem Umfang mit hoher Abscheideleistung aus dem Luftstrom abscheidbar und mit geringem Aufwand in einen Ölkreislauf eines Strahltriebwerkes zurückführbar ist.

In Abhängigkeit des jeweils vorliegenden Anwendungsfalles besteht auch die Möglichkeit, den Ölabscheider des erfindungsgemäßen Strahltriebwerkes mit aus der DE 10 2006 058 343 A1 bekannten Mitteln zum Aufbringen elektrostatischer Kräfte auszuführen, um die Abscheideleistung des Ölabscheiders weiter zu verbessern.

Sowohl die in den Patentansprüchen angegebenen Merkmale als auch die in den nachfolgenden Ausführungsbeispielen des erfindungsgemäßen Strahltriebwerkes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Strahltriebwerkes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Strahltriebwerkes mit einer im Bläsergehäuse angeordneten Nebenaggregategetriebeeinrichtung;
- Fig. 1b: eine Fig. 1 a entsprechende Darstellung eines Strahltriebwerkes mit im Bereich des Triebwerkskerns montierter Nebenaggregategetriebeeinrichtung; und
- Fig. 2: eine stark schematisierte Teildarstellung des Strahltriebwerkes gemäß Fig. 1 a mit im Bereich der Nebenaggregategetriebeeinrichtung angeordnetem Ölabscheider.

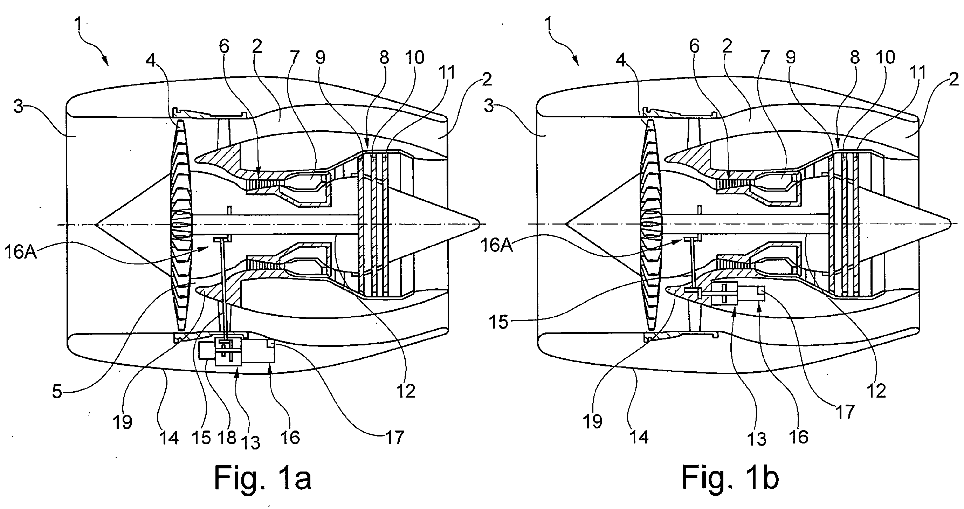

In Fig. 1 a und 1 b ist jeweils ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerksachse 12 verbunden sind.

Bei der Ausführung des Strahltriebwerks 1 gemäß Fig. 1a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

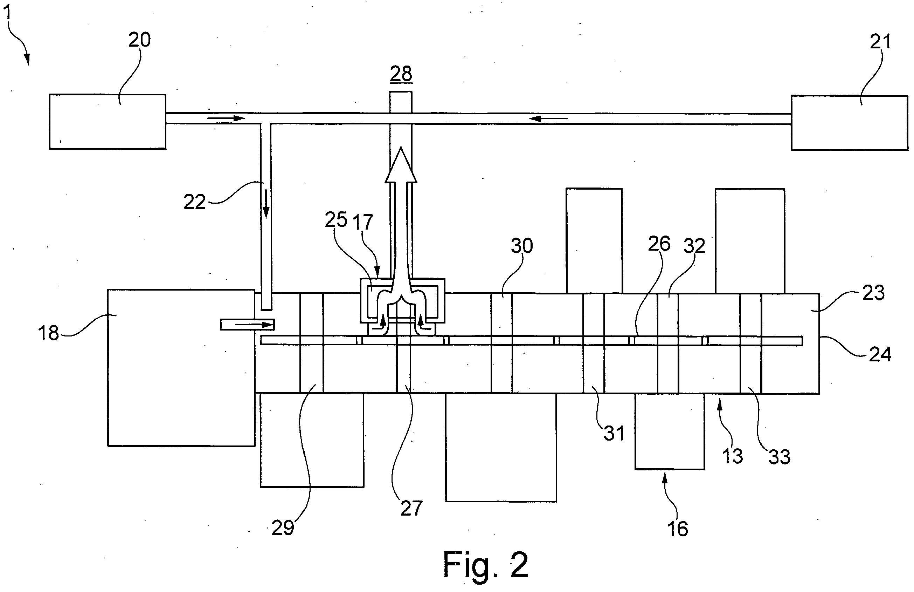

Fig. 2 zeigt das Strahltriebwerk 1 gemäß Fig. 1 a in stark schematisierter Form im Bereich der Nebenaggregategetriebeeinrichtung 13, der Nebenaggregate 16 und des Ölabscheiders 17, der vorliegend mit dem Öltank 18 und zwei weiteren Bereichen 20, 21 in Wirkverbindung steht, die als Lagerkammern des Strahltriebwerks ausgeführt sind und im Betrieb des Strahltriebwerks 1 mit Öl aus dem Öltank 18 zum Schmieren und Kühlen beaufschlagt werden. Dabei stellt der Bereich 20 die Lagerkammer des vorderen Lagers und der Bereich 21 die Lagerkammer des hinteren Lagers des Strahltriebwerkes 1 dar.

Die nachfolgend zu der Ausführung des Strahltriebwerks 1 gemäß Fig. 1 a näher erläuterten Aspekte sind im Wesentlichen auch bei der Ausführungsform des Strahltriebwerks 1 gemäß Fig. 1b verwirklichbar, weshalb bezüglich der Funktionsweise des Strahltriebwerks 1 gemäß Fig. 1b insbesondere im Bereich der Nebenaggregategetriebeeinrichtung 13, der Nebenaggregate 16 und des Ölabscheiders 17 auf die Beschreibung zu Fig. 2 verwiesen wird.

Bei der in Fig. 2 gezeigten Ausführungsform des Strahltriebwerks 1 sind jeweils ein Luft-Öl-Volumenstrom aus der vorderen Lagerkammer 20 und der hinteren Lagerkammer 21 in Richtung eines Leitungsbereiches 22 führbar, der vorliegend in einen Innenraum 23 eines Gehäuses 24 der Nebenaggregategetriebeeinrichtung 13 mündet. Des Weiteren ist auch der Öltank 18 vorliegend mit dem Innenraum 23 des Gehäuses 24 der Nebenaggregategetriebeeinrichtung 13 verbunden, um einen Luft-Öl-Volumenstrom des Öltanks 18 sowie die Luft-Öl-Volumenströme der Lagerkammern 20 und 21 über den Leitungsbereich 22 in den Innenraum 23 einleiten zu können. Der Innenraum 23 des Gehäuses 24 der Nebenaggregategetriebeeinrichtung 13 ist mit dem Ölabscheider 17 gekoppelt, wobei bei einer entsprechenden Bedruckung des Innenraums 23 ein Luft-Öl-Volumenstrom aus dem Gehäuse 24 der Nebenaggregategetriebeeinrichtung 13 in den Ölabscheider 17 eingeleitet wird. In einem Innenraum des Ölabscheiders 17 ist ein poröser Bereich 25 drehbar angeordnet ist, der von dem aus dem Innenraum 23 des Gehäuses 24 der Nebenaggregategetriebeeinrichtung 13 ausströmenden Luft-Öl-Volumenstrom durchströmbar ist.

Der poröse Bereich 25 ist vorliegend über ein Zahnrad 27 von der Nebenaggregategetriebeeinrichtung 13 antreibbar und wirkt als Zentrifuge, um den Anteil des Öls in dem durch den porösen Bereich 25 strömenden Luft-Öl-Volumenstrom soweit als möglich reduzieren zu können. Dabei wird der Ölanteil des Luft-Öl-Volumenstromes im Ölabscheider 17 im Bereich des porösen Bereiches 25 einerseits wie beim Durchströmen eines Prallfilters und andererseits wie im Bereich einer Zentrifuge aufgrund der Rotation des porösen Bereiches 25 durch Abscheiden des Öles aus der Luft reduziert. Das im Bereich des porösen Bereiches 25 aus dem Luft-Öl-Volumenstrom ausgefilterte Öl wird im äußeren Bereich des Ölabscheiders 17 in Fig. 2 nicht näher dargestellter Art und Weise über eine Pumpeneinrichtung abgesaugt und zurück in den Öltank 18 geführt. Der aus dem Ölabscheider 17 in Richtung der Umgebung 28 ausströmende Luftstrom weist nur eine geringe Beladung an Öl auf. Das Zahnrad 27 ist neben weiteren Zahnrädern 29 bis 33 drehfest mit einer Getriebewelle 26 verbunden und im Innenraum 24 der Nebenaggregategetriebeeinrichtung 13 angeordnet.

Dadurch, dass die Luft-Öl-Volumenströme der Lagerkammern 20 und 21 und des Öltanks 18 in den Innenraum 23 des Gehäuses 24 der Nebenaggregategetriebeeinrichtung 13 eingeleitet werden, ist die Beladung des in Richtung der Umgebung 28 abströmenden Luft-Volumenstromes mit Öl auf einfache Art und Weise gering. Dies resultiert aus der Tatsache, dass das Durchleiten der Luft-Öl-Volumenströme der Lagerkammern 20 und 21 und des Öltanks 18 durch den Innenraum 23 aufgrund der stark ölhaltigen Umgebung innerhalb der Nebenaggregategetriebeeinrichtung 13 zunächst auf die Öltemperatur in der Nebenaggregategetriebeeinrichtung 13 abgekühlt wird. Die durch die Abkühlung der Luft-Öl-Volumenströme einsetzende Kondensation von in den Luft-Öl-Volumenströmen gasförmig gebundenem Öl führt zu einem Anstieg der Durchmesser der in den Luft-Öl-Volumenströmen vorhandenen Ölpartikel, die auf jeden Fall größer sind als Öltropfen, die aufgrund ihrer geringen Größe im porösen Bereich 25 nicht ausfilterbar sind.

Stromauf des Ölabscheiders 17 ist vorliegend im Bereich des Übergangs zwischen dem Ölabscheider 17 und dem Innenraum 23 des Gehäuses 24 der Nebenaggregategetriebeeinrichtung 13 ein Umlenkbereich für den aus dem Innenraum 23 in Richtung des Ölabscheiders 17 geleiteten Luft-Öl-Volumenstromes vorgesehen, in dessen Bereich zumindest ein Teil des Öls aus dem Luft-Öl-Volumenstrom aufgrund der im Umlenkbereich wirkenden Zentrifugalkraft abgeschieden wird. Damit wird bereits im Umlenkbereich die Beladung des Luft-Öl-Volumenstromes durch Abscheiden größerer Tröpfchen reduziert, die eine größere Trägheit als Ölpartikel mit kleineren Durchmessern aufweisen.

Alternativ hierzu besteht auch die Möglichkeit, mehrere Umlenkbereiche für die einzelnen Luft-Öl-Volumenströme aus den Lagerkammern 20 und 21 und aus dem Öltank 18 vorzusehen, um Öl aus den Luft-Öl-Volumenströmen bereits vor dem Eintritt in den Innenraum 23 des Gehäuses 24 der Nebenaggregategetriebeeinrichtung 13 abscheiden zu können.

Unabhängig von der Anordnung des Umlenkbereiches werden die in den Luft-Öl-Volumenströmen aus den Lagerkammern 20 und 21 und aus dem Öltank 18 vorhandenen kleineren Tröpfchen durch das Einleiten in den Innenraum 23 vergrößert, was durch die jeweils vorliegenden Anziehungskräfte zwischen den einzelnen Öltröpfchen in den Luft-Öl-Volumenströmen und der in der Luft im Innenraum 23 vorhandenen Öltröpfchen begünstigt wird. Durchströmt der mit Öl angereicherte gesammelte Luft-Öl-Volumenstrom den Ölabscheider 17 und dessen porösen Bereich 25, der im Betrieb des Strahltriebwerks 1 entsprechend rotiert, wird ein wesentlicher Anteil des im Luft-Öl-Volumenstrom vorhandenen Öles abgeschleudert und anschließend aus dem Ölabscheider 17 in Richtung des Öltanks 18 abgesaugt. Die durch die im Bereich des Innenraums 24 der Nebenaggregategetriebeeinrichtung 13 auftretende Auswaschung des Öls nunmehr vergrößerten Ölpartikel im gesammelten Luft-Öl-Volumenstrom können von dem Metallschaum 25 im Breather 17 wesentlich effizienter separiert werden, womit Ölverluste des Strahltriebwerks 1 durch verringerte Emissionen in Richtung der Umgebung 28 minimiert sind.

Bei der Ausführung gemäß Fig. 2 ist der Ölabscheider 17 nahezu vollständig in das Gehäuse 24 der Nebenaggregategetriebeeinrichtung 13 integriert. In Abhängigkeit des jeweils vorliegenden Anwendungsfalles besteht auch die Möglichkeit, den Ölabscheider 17 vollständig innerhalb oder vollständig außerhalb des Gehäuses 24 der Nebenaggregategetriebeeinrichtung 13 anzuordnen.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Öltank
- 19: Bauteil
- 20: Bereich, vordere Lagerkammer
- 21: Bereich, hintere Lagerkammer
- 22: Leitungsbereich
- 23: Innenraum
- 24: Gehäuse
- 25: poröser Bereich
- 26: Getriebewelle
- 27: Zahnrad
- 28: Umgebung
- 29 bis 33: Zahnrad

## Patentansprüche

1. Strahltriebwerk (1) mit wenigstens einem Ölabscheider (17), durch den ein Luft-Öl-Volumenstrom aus wenigstens einem mit Öl beaufschlagten Bereich (18, 20, 21) zum Abscheiden von Öl führbar ist, wobei der Luft-Öl-Volumenstrom aus dem mit Öl beaufschlagten Bereich (18, 20, 21) über einen Innenraum (23) eines Gehäuses (24) einer Nebenaggregategetriebeeinrichtung (13) in den Ölabscheider (17) einleitbar ist und die Luft über einen Luftauslass und das Öl über einen Ölauslass aus dem Ölabscheider (17) abführbar ist, **dadurch gekennzeichnet, dass** im Bereich von Zahnradpaarungen der Nebenaggregategetriebeeinrichtung (13) Ablenkbleche vorgesehen sind, mittels welchen die mit Öl zum Kühlen und Schmieren zu beaufschlagenden Bereiche von Zahnradpaarungen der Nebenaggregategetriebeeinrichtung von einer Strömung des Luft-Öl-Volumenstromes abschirmbar sind.

2. Strahltriebwerk nach Anspruch 1, **dadurch gekennzeichnet, dass** der Ölabscheider (17) mit einem in Rotation versetzbaren porösen Bereich (25) ausgeführt ist, der im Strömungsweg des Luft-Öl-Volumenstromes angeordnet ist und von dem Luft-Öl-Volumenstrom durchströmbar ist.

3. Strahltriebwerk nach Anspruch 2, **dadurch gekennzeichnet, dass** stromauf des porösen Bereiches (25) des Ölabscheiders (17) zumindest ein Umlenkbereich im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist.

4. Strahltriebwerk nach Anspruch 2 oder 3, **dadurch gekennzeichnet, dass** stromauf des porösen Bereiches des Ölabscheiders zumindest eine Zentrifuge im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist.

5. Strahltriebwerk nach Anspruch 3 oder 4, **dadurch gekennzeichnet, dass** der Umlenkbereich und/oder die Zentrifuge im Bereich des Ölabscheiders vorgesehen ist.

6. Strahltriebwerk nach einem der Ansprüche 1 bis 5, **dadurch gekennzeichnet, dass** mehrere mit Öl beaufschlagte Bereiche (18, 20, 21) über den Innenraum (23) des Gehäuses (24) der Nebenaggregategetriebeeinrichtung (13) mit dem Ölabscheider (17) in Wirkverbindung stehen.

7. Strahltriebwerk nach Anspruch 6, **dadurch gekennzeichnet, dass** der Ölabscheider (17) und/oder der Umlenkbereich und/oder die Zentrifuge wenigstens teilweise innerhalb und/oder außerhalb des Gehäuses (23) der Nebenaggregategetriebeeinrichtung (13) angeordnet ist oder sind.

8. Strahltriebwerk nach einem der Ansprüche 1 bis 7, **dadurch gekennzeichnet, dass** ein mit Öl beaufschlagter Bereich (18, 20, 21) ein Öltank oder eine Lagerkammer ist.

## Claims

1. Jet engine (1), comprising at least one oil separator (17) through which an air-oil volume flow from at least one area (18, 20, 21) that is impinged by oil can be guided for the purpose of separating oil, wherein the air-oil volume flow can be guided from the area (18, 20, 21) which is impinged by oil into the oil separator (17) via an internal space (23) of a housing (24) of an auxiliary gearbox (13), and the air can be discharged via an air outlet and the oil can be discharged via an oil outlet (39) from the oil separator (17), **characterized in that** in the area of the gear wheel pairs of the auxiliary gearbox (13) deflectors are provided, by means of which the areas of the gear wheel pairs of the auxiliary gearbox that are to be impinged by oil for cooling and lubrication can be shielded from the flow of the air-oil volume flow.

2. Jet engine according to claim 1, **characterized in that** the oil separator (17) is embodied with a porous area (25) that can be set into rotation and that is arranged inside the flow path of the air-oil volume flow and through which the air-oil volume flow can flow.

3. Jet engine according to claim 2, **characterized in that** upstream of the porous area (25) of the oil separator (17) at least one deflection area is provided in the flow path of the air-oil volume flow, in the area of which at least one part of the oil can be separated from the air-oil volume flow as a result of the acting centrifugal force.

4. Jet engine according to claim 2 or 3, **characterized in that** upstream of the porous area of the oil separator at least one centrifuge is provided in the flow path of the air-oil volume flow, in the area of which at least one portion of the oil can be separated from the air-oil volume flow as a result of the acting centrifugal force.

5. Jet engine according to claim 3 or 4, **characterized in that** the deflection area and/or the centrifuge is provided in the area of the oil separator.

6. Jet engine according to one of the claims 1 to 5, **characterized in that** multiple areas (18, 20, 21) that are impinged by oil are in operative connection with the oil separator (17) via the internal space (23) of the housing (24) of the auxiliary gearbox (13).

7. Jet engine according to claim 6, **characterized in that** the oil separator (17) and/or the deflection area and/or the centrifuge is or are arranged at least partially inside and/or outside of the housing (23) of the auxiliary gearbox (13).

8. Jet engine according to one of the claims 1 to 7, **characterized in that** an area (18, 20, 21) that is impinged by oil is an oil tank or a bearing chamber.

## Revendications

1. Moteur à réaction (1) comprenant au moins un déshuileur (17) à travers lequel peut être guidé pour séparer de l'huile un flux volumique air-huile provenant d'au moins une zone (18, 20, 21) alimentée en huile, sachant que le flux volumique air-huile provenant de la zone (18, 20, 21) alimentée en huile peut être introduit dans le déshuileur (17) en passant par un espace intérieur (23) d'un carter (24) d'un boîtier d'accessoires (13) et que l'air et l'huile peuvent être évacués du déshuileur (17) respectivement par une sortie d'air et par une sortie d'huile, **caractérisé en ce que** dans la zone de paires de roues dentées du boîtier d'accessoires (13) sont prévus des déflecteurs au moyen desquels les zones de paires de roues dentées du boîtier d'accessoires à alimenter en huile à des fins de refroidissement et de lubrification peuvent être isolées d'un écoulement du flux volumique air-huile.

2. Moteur à réaction selon la revendication n° 1, **caractérisé en ce que** le déshuileur (17) est conçu avec une partie poreuse (25) mobile en rotation qui est placée dans la voie d'écoulement du flux volumique air-huile et peut être traversée par le flux volumique air-huile.

3. Moteur à réaction selon la revendication n° 2, **caractérisé en ce qu'**en amont de la partie poreuse (25) du déshuileur (17) est prévue dans la voie d'écoulement du flux volumique air-huile au moins une zone de déviation dans laquelle au moins une partie de l'huile du flux volumique air-huile peut être séparée sous l'effet de la force centrifuge.

4. Moteur à réaction selon la revendication n° 2 ou n° 3, **caractérisé en ce qu'**en amont de la partie poreuse du déshuileur est prévue dans la voie d'écoulement du flux volumique air-huile au moins une centrifugeuse dans la zone de laquelle au moins une partie de l'huile du flux volumique air-huile peut être séparée sous l'effet de la force centrifuge.

5. Moteur à réaction selon la revendication n° 3 ou n° 4, **caractérisé en ce que** la zone de déviation et/ ou la centrifugeuse est/ sont prévue(s) dans la zone du déshuileur.

6. Moteur à réaction selon une des revendications n° 1 à n° 5, **caractérisé en ce que** plusieurs zones (18, 20, 21) alimentées en huile sont en liaison active avec le déshuileur (17) via l'espace intérieur (23) du carter (24) du boîtier d'accessoires (13).

7. Moteur à réaction selon la revendication n° 6, **caractérisé en ce que** le déshuileur (17) et/ ou la zone de déviation et/ ou la centrifugeuse est/ sont au moins partiellement disposé(e)(s) à l'intérieur et/ ou à l'extérieur du carter (23) du boîtier d'accessoires (13).

8. Moteur à réaction selon une des revendications n° 1 à n° 7, **caractérisé en ce qu'**une zone (18, 20, 21) alimentée en huile est un réservoir d'huile ou une chambre de palier.
